# EUROPEAN PATENT SPECIFICATION

(11) **EP 3 193 037 B1**
(45) Date of publication and mention of the grant of the patent: **23.10.2019**
(21) Application number: 17151168.6
(22) Date of filing: 12.01.2017
(51) Int. Cl.: F16D 65/12

(54) **DUAL-CONNECTION DISC BRAKE ROTOR**
DUALVERBINDUNGS-SCHEIBENBREMSROTOR
ROTOR DE FREIN À DISQUE À CONNEXION DOUBLE

(30) Priority: 12.01.2016 US 201662277576 P; 03.05.2016 US 201662331112 P
(43) Date of publication of application: 19.07.2017
(73) Proprietor: KIC LLC, Vancouver, WA 98660 (US)
(72) Inventor: Fakhoury, Omar J., Vancouver, WA Washington 98683 (US); Ge, Yi, Huntley, IL Illinois 60142 (US)
(74) Representative: Fleuchaus, Michael A.

(56) References cited:
- EP-A1- 0 198 217
- EP-A1- 0 508 865
- DE-A1-102004 034 121
- US-A- 2 745 518
- US-A- 2 769 512

## Description

### CROSS-REFERENCES TO RELATED APPLICATIONS

This patent application claims the benefit of U.S. Provisional Application No. 62/277,576 filed January 12, 2016 and U.S. Provisional Application No. 62/331,112 filed May 3, 2016.

### FIELD OF THE INVENTION

This disclosure is directed to rotary disc brakes, and, more particularly, to a dual-connection disc brake rotors, as for instance known from US-A-2 745 518.

### BACKGROUND

A common brake found on vehicles ranging from small cars and trailers to large scale trucks and other wheeled vehicles is the disc brake. During braking, rotational energy of the affixed wheel is converted into heat by the braking system in order to slow the rotation of the wheel. As with any brake system, one of the crucial factors in determining braking efficiency is heat dissipation. One of the methods of heat dissipation employed is ventilated disc brake rotors.

Currently, the predominant design of vented hydraulic and air brake disc rotors is a dual disc design featuring ventilation from either an inboard or outboard side of the rotor. In this design, one disc of the pair is affixed to the main rotor body and the second disc is affixed to the first by a series of vanes or vane-like structures. The vanes create spaces running radially between the two discs. As the rotor is rotated, air is drawn from either the inboard or outboard side of the rotor, and forced through the spaces to convectively cool the two discs.

A further source of heat dissipation is conductive cooling where heat from the disc is transferred into the rotor body and potentially other portions of the wheel structure. In the conventional design, only one of the discs is directly affixed to the rotor body. For the disc that is not affixed, the conductive heat dissipation path must first pass through the affixed disc before transferring into the rotor body. By the nature of the physical arrangement of the discs in the conventional designs, both discs have relatively similar convective heat dissipation, but the affixed disc has a significant increase in conductive heat dissipation over the other disc.

Increased conductive heat dissipation, or cooling, of one disc versus the other causes a thermal differential between the two discs. The thermal differential causes differential expansion and contraction of the discs as they are heated and cooled. Uneven cooling and heating of the discs can cause the discs to warp or cone and causes mechanical stress within the discs and rotor. Both of these can cause decreases in braking efficiency, safety, and life expectancy of the rotor.

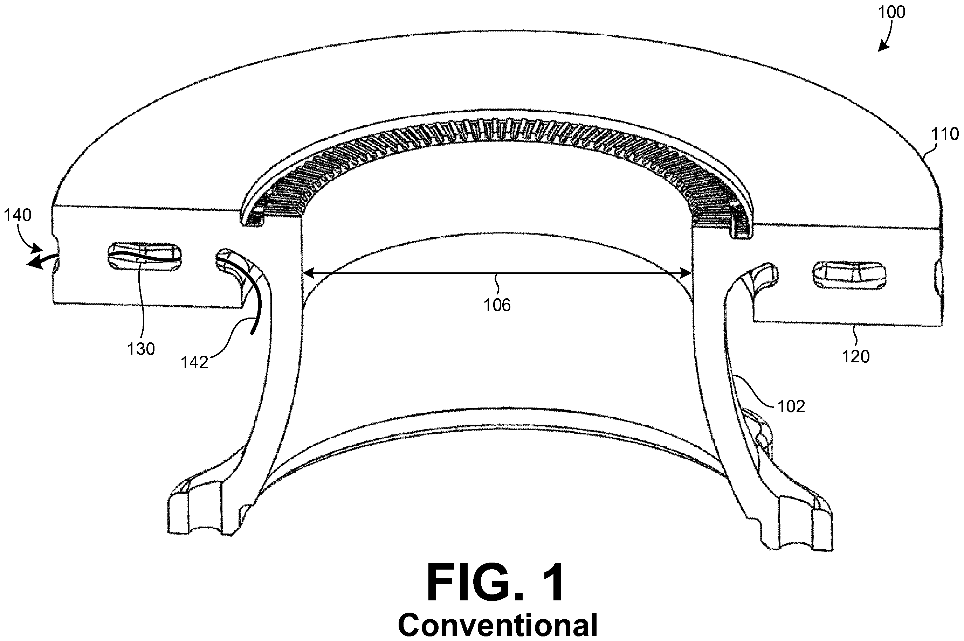

For example, Fig. 1 shows a conventional dual-disc brake rotor 100 having an inboard connection of disc 110 to the second, "floating," disc 120. "Floating" is a term used to refer to the disc of the pair that is not directly connected to the rotor body 102. In the example shown, the floating disc 120 is the outboard disc of the brake rotor 100 and is connected by vanes 130 to the inboard disc 110. The inboard disc 110 is directly connected to the rotor body 102 about the entire periphery of the interior diameter 106.

The vanes 130 are interspersed between, and axially interconnect, the inboard disc 110 and outboard disc 120, forming spaces 140 through which air can flow 142. Air flows 142 radially between the discs 110 and 120, and around the vanes, as the rotor 100 is rotated during normal operation. Air is drawn in along the rotor body 102, through the spaces between the vanes 130 and out about the periphery of the space 140. Rotation of the rotor assembly 100 during use creates a low pressure area about the periphery of the rotor assembly 100, drawing air between the discs 110 and 120, radially through the spaces 140 and about the vanes 130.

Air flow 142 through the space 140 convects heat from the discs 110 and 120, cooling the discs 110 and 120 during use. The convection heat path dissipates the heat generated in the discs 110 and 120 during use. The generated heat is convected from the discs 110 and 120 into the air stream 142 and exhausted from the rotor 100, into the surrounding atmosphere.

An additional heat dissipation method is conduction, whereby heat from the discs 110 and 120 is conducted from the discs into the rotor body 102. The rotor body 102 acts as a heat sink, collecting heat generated by the discs 110 and 120 during braking and providing a surface area across which the heat can then be dissipated to the surrounding atmosphere or environment, including additional wheel structures. The vanes 130 physically and thermally interconnect the two discs 110 and 120. Heat generated in the "floating" disc 120 is conducted through the vanes 130 into the inboard disc 110. The inboard disc 110 in turn conducts heat into the rotor body 102.

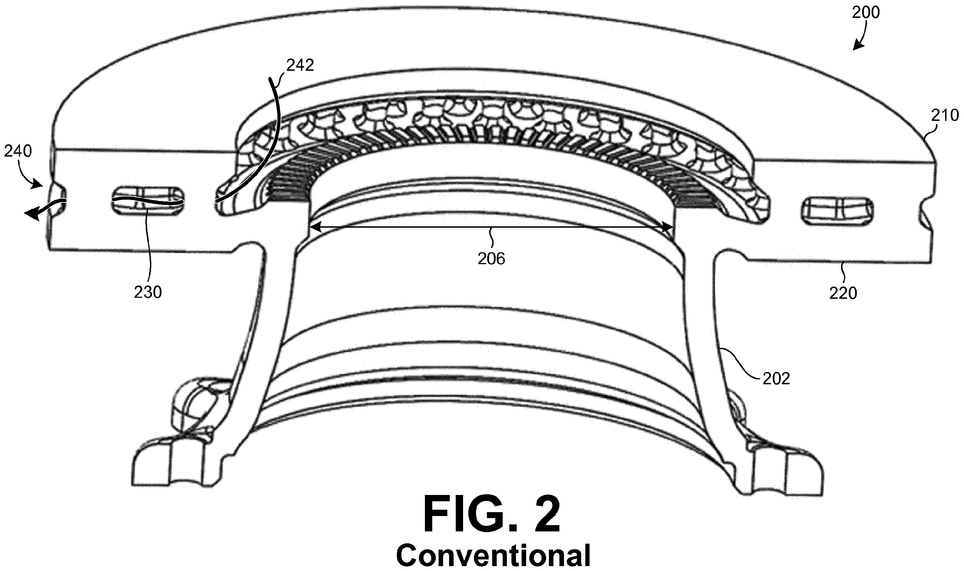

Fig. 2 is another example of a conventional dual disc rotor 200, differing from the example of Fig. 1, in having an outboard connection of an outboard disc 220 to the second, "floating," disc 210. In this example, the outboard disc 220 is directly connected to the rotor body 202 about an inner diameter 206. The inboard disc 210, the "floating" disc, is connected to the outboard disc 220 by vanes 230. The vanes 230 are interspersed between the two discs 210 and 220, forming spaces 240 through which air can flow radially 242.

Mechanisms of heat dissipation in the example dual disc rotor 200 are similar to those of the example assembly 100 of Fig. 1. Heat from the discs, 210 and 220, can be convected by the air flow 242 through the space 240 and exhausted to the surrounding atmosphere. However, in the example of Fig. 2, rather than the air being drawn along the rotor body from an outboard side, the air is drawn into the spaces 240 through the inboard side of the rotor assembly 200. As with the previous example, rotation of the rotor 200 generates a low pressure area about the periphery of the discs 210 and 220, causing air to be drawn radially through the spaces 240.

Heat is also conducted from the discs 210 and 220, into the rotor body 202. As with the previous example, the vanes 230 physically and thermally connect the discs 210 and 220. Heat generated in the disc 210 can be conducted into the disc 220 and into the rotor body 202 for dissipation.

Both example rotors 100 and 200 of Figs. 1 and 2 are similar in structure and thermal dissipation characteristics. As such, both suffer from similar limitations. As braking pressure is applied to the discs of the examples of Figs. 1 and 2, the discs are heated due to friction as the rotational energy of the rotor is converted into heat. To maintain braking efficiency, the discs need to dissipate this heat quickly and efficiently. In the two examples, Figs. 1 and 2, the "floating" disc suffers from decreased heat dissipation capability in comparison to the directly connected disc. The conduction pathway for the "floating" disc is extended through the directly connected disc, a disc which is also heated during braking, causing the heat to be conducted more slowly from the "floating" disc. While convective cooling through the space between the discs accounts for a large portion of the heat dissipation capabilities of the assembly, the difference in conductive cooling is enough to cause uneven cooling of the discs. That is, the "floating" disc dissipates heat more slowly than the disc directly connected. This thermal variation causes "coning" or warpage between the discs. As one disc is heated or cooled more rapidly with respect to a second, connected disc, the thermal variation causes differential expansion or contraction of the braking discs. Not only does the "coning" affect braking performance and efficiency, it also increases the overall mechanical stress exerted within the discs, which can lead to fatigue failure of the material.

Embodiments of the invention address shortcomings of the prior art.

### SUMMARY OF THE DISCLOSURE

Embodiments of the disclosed subject matter provide improved heat dissipation from and reduced thermal differential between the discs of a dual disc rotor design.

Accordingly, at least some embodiments of an example brake rotor may include a substantially tubular rotor body, a first annular braking disc, a second annular braking disc, and a plurality of vanes. The first annular braking disc is directly connected to the rotor body at an inner periphery of the first braking disc. The second annular braking disc is directly connected to the rotor body at an inner periphery of the second braking disc. The second annular braking disc is positioned a distance axially from the first braking disc, forming a space between the first braking disc and the second braking disc. The plurality of vanes is disposed within the space, and the vanes axially interconnect the first braking disc and the second braking disc.

According to the invention, the brake rotor includes axial passageways disposed around the inner periphery of the first disc and the inner periphery of the second disc. The axial passageways extend axially through the first disc and the second disc. Accordingly, the axial passageways connect the space to a first region exterior to the rotor body and adjacent to the inner periphery of the first disc. The axial passageways also connect the space to a second region exterior to the rotor body and adjacent to the inner periphery of the second disc. Further the rotor includes radial passageways aligned with the space and extending radially through the rotor body. The radial passageways connect the space to a region interior to the rotor body encircled by an inner diameter of the rotor body. And the axial passageways may be radially aligned with the radial passageways.

### BRIEF DESCRIPTION OF THE DRAWINGS

Fig. 1 is an inboard-side perspective and sectional view of a conventional dual-disc brake rotor having an outboard-side floating disc.
Fig. 2 is an inboard-side perspective and sectional view of a conventional dual-disc brake rotor having an inboard-side floating disc.
Fig. 3 is an inboard-side perspective and sectional view showing material portions of a dual-connection disc brake rotor.
Fig. 4 is an inboard-side perspective and sectional view of a dual-connection disc brake rotor, according to embodiments of the invention.
Fig. 5 is a plan view of the inboard side of the dual-connection disc brake rotor of Fig. 4.
Fig. 6 is an outboard-side perspective and sectional view of a dual-connection disc brake rotor.
Fig. 7 is an inboard-side perspective and sectional view of the dual-connection disc brake rotor of Fig. 6.
Fig. 8 is an inboard-side perspective and cross-sectional view of a segment of the dual-connection disc brake rotor of Fig. 6.
Fig. 9 is an outboard-side perspective and cross-sectional view of another segment of the dual-connection disc brake rotor of Fig. 6.
Fig. 10 is an outboard-side perspective and sectional view of a dual-connection disc brake rotor.

### DETAILED DESCRIPTION

Cooling of the brake discs is an important component of not only braking ability but braking efficiency. Hot or high temperature brake discs can cause brake fade, increasing the stopping distance of a vehicle which can have a negative impact on safety. As described herein, embodiments of the invention are directed to a dual-connection disk brake rotor that provides improved heat dissipation and reduced thermal differential between the discs. Accordingly, embodiments of the dual-disk brake rotor provide improved conductive heat transfer from the discs because both discs are directly connected to the rotor body. Thus, neither disc is floating. Also, embodiments of the dual-disk brake rotor provide improved convective heat transfer from the discs by including radial air passageways, axial air passageways that are configured differently from conventional designs, or both. These features are described below in relation to the example embodiments illustrated in the drawings.

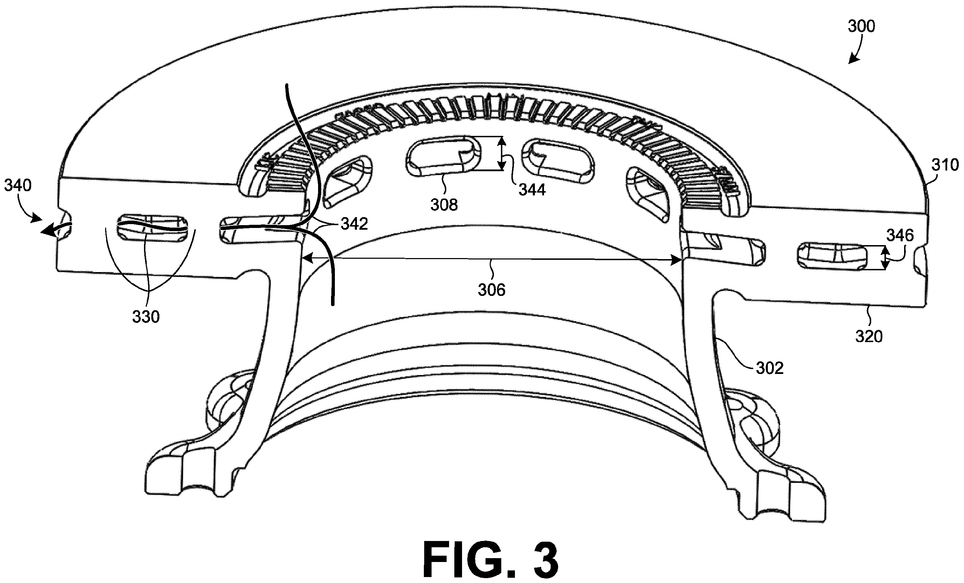

Fig. 3 is an inboard-side perspective and sectional view showing material portions of a dual-disc brake rotor, according to embodiments of the invention. As illustrated in Fig. 3, a dual-connection disc brake rotor 300 may include a rotor body 302, an inboard braking disc 310, and an outboard braking disc 320. The rotor body 302 is substantially tubular and has an inner diameter 306.

The inboard disc 310 and the outboard disc 320 are each substantially annular, and the discs are substantially parallel and coaxial. The inboard disc 310 and the outboard disc 320 are each directly connected, at an inner periphery of the respective disc, to the rotor body 302. In other words, each disc is directly connected to the rotor body 302 at the inner diameter of the disc's annulus.

The inboard disc 310 and the outboard disc 320 are interconnected by an array of vanes 330, forming a space 340 between the discs. Radial passageways, or openings, 308 are disposed about and through the inner diameter 306 of the rotor body 302, with the passageways 308 being axially aligned with the space 340. For example, the passageways 308 are axially aligned with the space 340 in that the passageways 308 preferably fall between the discs, as shown in Fig. 3. Preferably, each radial passageway 308 is elliptical where the radial passageway 308 intersects the inner diameter 306 of the rotor body 302. Examples of such elliptical radial openings 308 are shown in Fig. 3.

As the dual-connection disc brake rotor 300 is rotated about its axis, such as when the dual-connection disc brake rotor 300 is installed on a vehicle, an area of low pressure is generated about the periphery of the inboard disc 310 and the outboard disc 320. Air, indicated by arrows 342 in Fig. 3, is drawn through the radial passageways 308, into the spaces 340, around or past the vanes 330, and exhausted about the periphery of the inboard disc 310 and the outboard disc 320. The flow 342 of air through the gap 340 convects heat from both the inboard disc 310 and the outboard disc 320, exhausting the heated air to the surrounding atmosphere. This flow 342 of air is drawn from the interior of the rotor body 302 and preferably is unobstructed by either of the inboard disc 310 and the outboard disc 320 as the flow 342 of air passes around or past the vanes 330 and between the inboard disc 310 and the outboard disc 320. For example, an axial height 344 of the radial passageways 308 may be substantially equal to a distance 346 between the inboard disc 310 and the outboard disc 320. The convection of heat from the inboard disc 310 and the outboard disc 320 dissipates a portion of the thermal energy that is generated during a braking process.

As a further part of the heat dissipation process, thermal energy is conducted from the inboard disc 310 and the outboard disc 320 into the rotor body 302. In the example shown, the inboard disc 310 and the outboard disc 320 are directly connected to the rotor body 302 to form a conduction pathway for thermal energy flow. Additionally, the vanes 330 thermally interconnect the inboard disc 310 and the outboard disc 320, allowing heat to be conducted axially through the vanes 330 and from one of the discs to the other.

With the inboard disc 310 and the outboard disc 320 directly and radially connected to the rotor body 302, the efficiency of the conductive pathway is increased since neither disc is "floating." The dual-connection disc brake rotor 300 of Fig. 3 has convective dissipation capabilities that are similar to previous designs, but the dual-connection disc brake rotor 300 has increased conductive dissipation relative to those previous designs. Thus, the overall heat dissipation of the dual-connection disc brake rotor 300 is greater in both magnitude and efficiency in comparison to previous designs, such as the conventional "floating" disc examples of Figs. 1 and 2.

Also, since the inboard disc 310 and the outboard disc 320 are both directly connected to the same convective and conductive thermal pathways and are also thermally interconnected by vanes 330, the thermal variation within each disc and the thermal difference between the inboard disc 310 and the outboard disc 320 is reduced or minimized. Such a state reduces or minimizes the differential thermal expansion and contraction, known as coning, between the inboard disc 310 and the outboard disc 320, which increases braking efficiency and reduces mechanical stress.

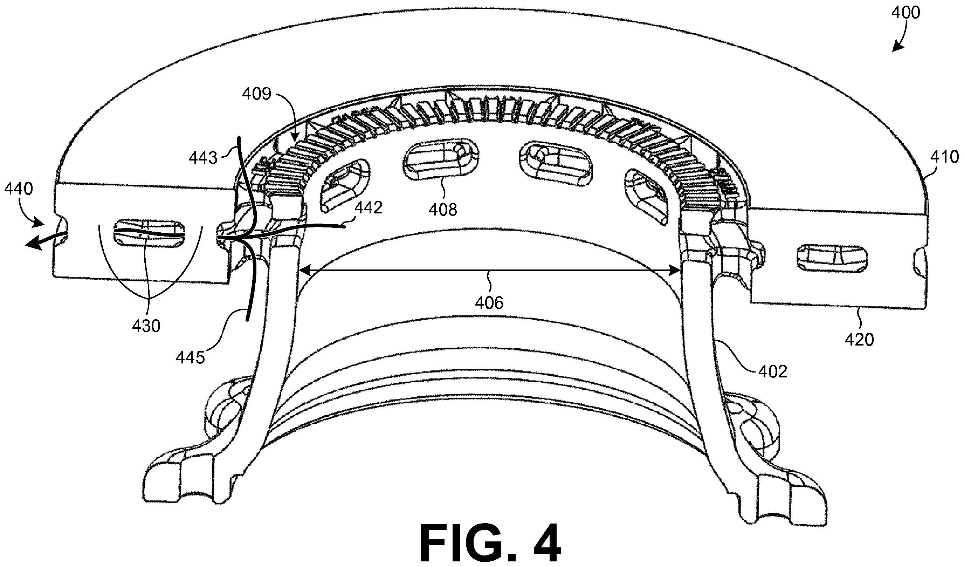

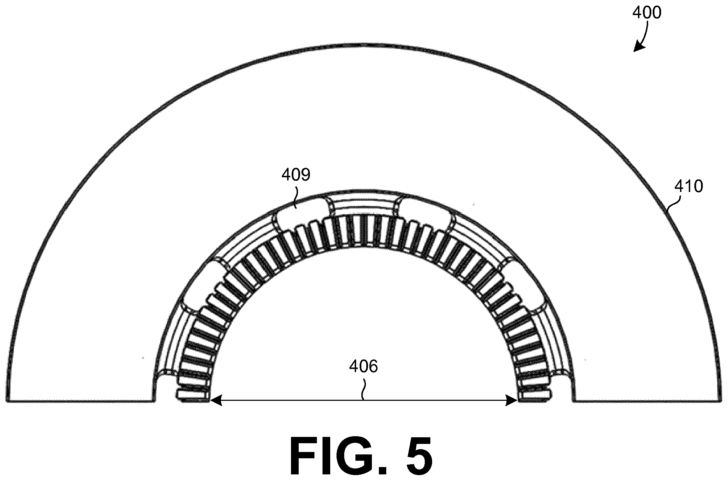

Fig. 4 is an inboard-side perspective and sectional view showing material portions of a dual-disc brake rotor, according to the invention. Fig. 5 is a plan view of the inboard side of the dual-disc brake rotor of Fig. 4. As illustrated in Figs. 4 and 5, a dual-connection disc brake rotor 400 may include a rotor body 402, an inboard disc 410, and an outboard disc 420.

The dual-connection disc brake rotor 400 of Figs. 4 and 5 is similar in overall structure to the dual-connection disc brake rotor 300 of Fig. 3 and may include the features and alternatives described above for Fig. 3. But the dual-connection disc brake rotor 400 of Figs. 4 and 5 also includes axial passageways, or openings, 409 as further described below. Also, versions of the dual-connection disc brake rotor 400 may include the axial passageways 409 but not the radial passageways 408.

The inboard disc 410 and the outboard disc 420 are directly and radially connected, at an inner periphery of the respective disc, to the rotor body 402. The inboard disc 410 and the outboard disc 420 are separated and interconnected axially by vanes 430, forming radial spaces 440 between the substantially annular discs. Radial passageways 408 are axially aligned with the spaces 440 and connect the spaces 440 with the interior of the dual-connection disc brake rotor 400.

The axial passageways 409 pass axially and directly through both the inboard disc 410 and the outboard disc 420, and the axial passageways 409 are distributed around the perimeter of the inner diameters of inboard disc 410 and the outboard disc 420. Also, the axial passageways 409 intersect and are aligned with the radial passageways 408, which are distributed about the inner diameter 406 of the rotor body 402. In this configuration, the radial passageways 408 and the axial passageways 409 overlap radially, thereby maintaining a solid, uninterrupted connection between the rotor body 402, the inboard disc 410, and the outboard disc 420 at the areas that are radially between the radial passageways 408. In this configuration, a suitably strong connection is maintained between the inboard disc 410, the outboard disc 420, and the rotor body 402.

Like what is described above for the dual-connection disc brake rotor 300 of Fig. 3, as the dual-connection disc brake rotor 400 is rotated, air, indicated by a first arrow 442, a second arrow 443, and a third arrow 445, is drawn through the radial passageways 408 and the axial passageways 409 and into the space 440. The air is then exhausted about the periphery of the dual-connection disc brake rotor 400. This flow of air is drawn from both the interior and exterior of the rotor body 402. In particular, the air flow indicated by the first arrow 442 is drawn from a region interior to the rotor body. The air flow indicated by the second arrow 443 is drawn from a region exterior to the rotor body 402 and adjacent to the inner periphery of the inboard disc 410. And the air flow indicated by the third arrow 445 is drawn from a region exterior to the rotor body 402 and adjacent to the inner periphery of the outboard disc 420. Drawing air through the multiple radial passageways 408 and axial passageways 409 increases the amount of airflow through the space 440 for convective cooling. The increased convective cooling capacity allows for quicker, more efficient heat dissipation from the inboard disc 410 and the outboard disc 420 during a braking process.

In addition to the increased convective capacity, the conductive heat dissipation capacity of the dual-connection disc brake rotor 400 is similar to that of the dual-connection disc brake rotor 300 shown in Fig. 3. While the volume of material between the inboard disc 410 and the outboard disc 420 and the rotor body 402 is reduced due to the presence of the axial passageways 409, the decreased volume of material does not substantially reduce or adversely affect the increased conductive cooling capacity afforded by the direct connection of the inboard disc 410 and the outboard disc 420 to the rotor body 402.

As described above with respect to Fig. 3, the vanes 430 of Fig. 4 interconnect the inboard disc 410 and the outboard disc 420, allowing thermal conduction from one disc to the other. In combination with the direct conductive thermal pathway between each disc and the rotor body 402, the vanes 430 help to maintain thermal uniformity across both discs. Since the inboard disc 410 and the outboard disc 420 are thermally interconnected by vanes 430 and have similar heat dissipation capacity, the temperature difference between the inboard disc 410 and the outboard disc 420 is reduced or minimized. This thermal uniformity helps prevent coning and warpage caused by differential expansion and contraction between the inboard disc 410 and the outboard disc 420.

The increased heat dissipation capacity of the dual-connection disc brake rotor 400 reduces the amount of thermal and structural stress experienced by the inboard disc 410 and the outboard disc 420 as well as the overall dual-connection disc brake rotor 400. The reduced stress levels can reduce coning effects of the inboard disc 410 and the outboard disc 420 and increase the life expectancy of the dual-connection disc brake rotor 400, while maintaining a high level of braking efficiency.

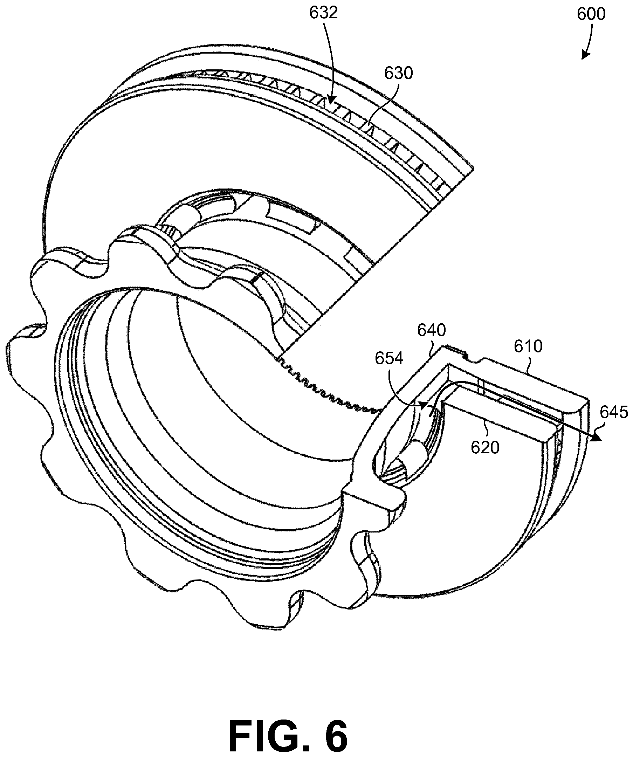

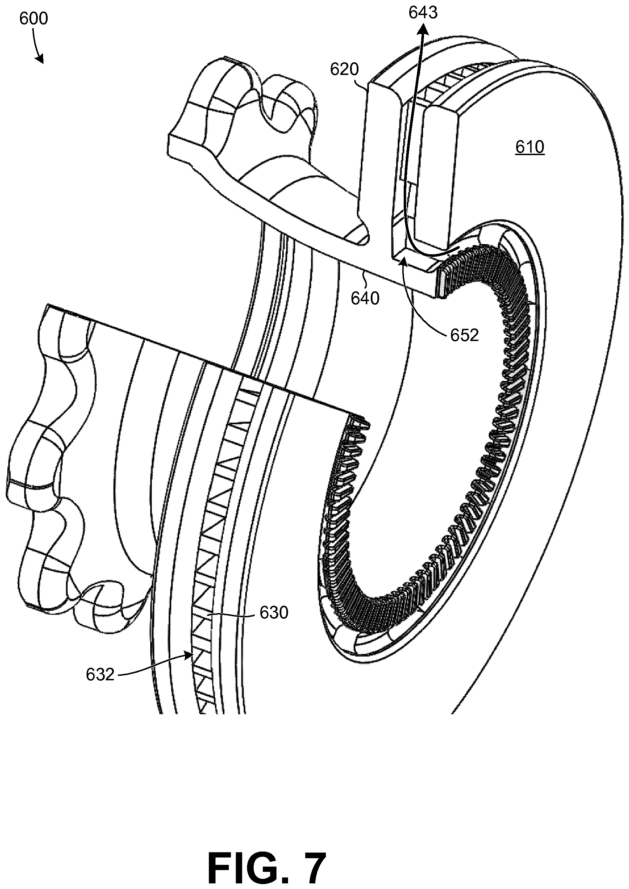

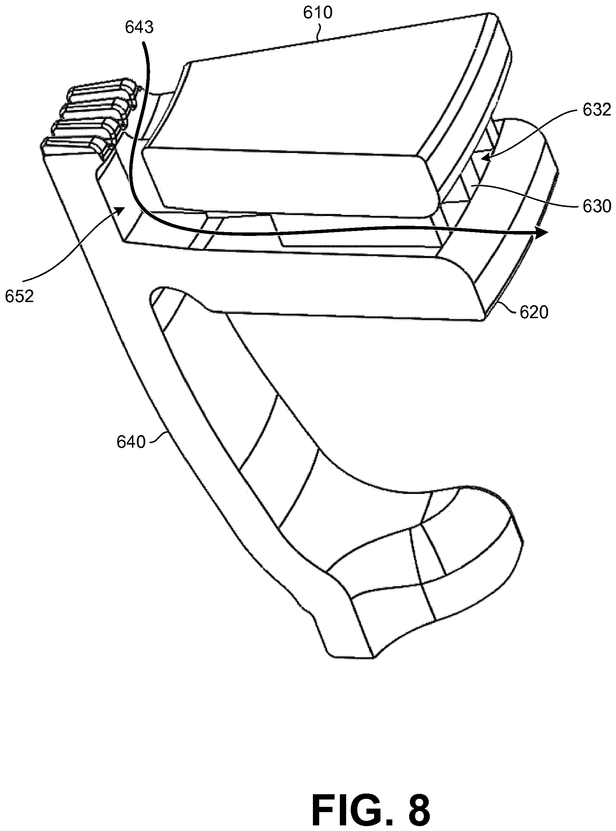

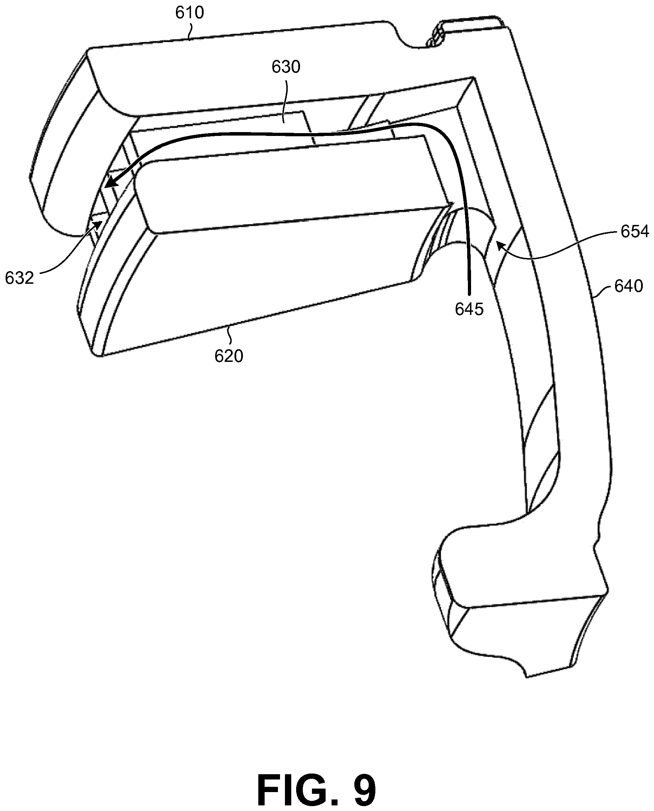

Fig. 6 is an outboard-side perspective and sectional view showing material portions of a dual-disc brake rotor. Fig. 7 is an inboard-side perspective and sectional view of the dual-disc brake rotor of Fig. 6. Fig. 8 is an inboard-side perspective and cross-sectional view of a segment of the dual-disc brake rotor of Fig. 6. Fig. 9 is an outboard-side perspective and cross-sectional view of another segment of the dual-disc brake rotor of Fig. 6.

The dual-connection disc brake rotor 600 of Figs. 6-9 is similar in overall structure to the dual-connection disc brake rotor 300 of Fig. 3 and the dual-connection disc brake rotor 400 of Figs. 4 and 5 and may include the features and alternatives described above for Figs. 3-5. But the dual-connection disc brake rotor 600 of Figs. 6-9 includes alternating axial passageways as described below.

As illustrated in Figs. 6-9, a dual-connection disc brake rotor 600 may include a rotor body 640, an inboard disc 610, and an outboard disc 620. The inboard disc 610 and the outboard disc 620 are each directly connected to the rotor body 640 about an inner periphery of each of the inboard disc 610 and the outboard disc 620 and are separated by a space 632 between the substantially annular discs. Further, the inboard disc 610 and the outboard disc 620 are interconnected by a series of vanes or vane-like structures 630 which extend from one disc to the other within the space 632.

Inboard-side axial passageways, or openings, 652 are disposed about the inner periphery of the inboard disc 610, and outboard-side axial passageways, or openings, 654 are disposed about the inner periphery of the outboard disc 620. The inboard-side axial passageways 652 and the outboard-side axial passageways 654 extend from an exterior of the dual-connection disc brake rotor 600, through the respective inboard disc 610 or outboard disc 620, and terminate in the space 632 between the disc pair. The inboard-side axial passageways 652 and the outboard-side axial passageways 654 allow air to pass from the exterior of the rotor 600 and through the space 632 that is between the discs to convectively cool the inboard disc 610 and the outboard disc 620. Preferably, the inboard-side axial passageways 652 and the outboard-side axial passageways 654 are alternating. In the context of alternating passageways, "alternating" means that the inboard-side axial passageways 652 and the outboard-side axial passageways 654 are not aligned radially. "Alternating" further means that, in moving radially about the rotor body 640, each inboard-side axial passageway 652 is followed by one of the outboard-side axial passageways 654; likewise, each outboard-side axial passageway 654 is followed by one of the inboard-side axial passageways 652.

Like what is described above for the dual-connection disc brake rotor 300 of Fig. 3, as the dual-connection disc brake rotor 600 rotates, air is drawn through the inboard-side axial passageways 652 (indicated by arrow 643) and the outboard-side axial passageways 654 (indicated by arrow 645), directed through the space 632 and past the vanes 630, and exhausted about the periphery of the discs 610 and 620. The flow of air through the space 632 convectively cools the discs 610 and 620, removing heat generated during a braking event from the discs 610 and 620.

Further cooling is provided by conduction between the discs 610 and 620 and the rotor body 640. The vanes 630 thermally link the two discs 610 and 620, thereby helping to stabilize the temperature across the disc pair. Further, the direct connection of both discs 610 and 620 to the rotor body 640 allows the rotor body 640 to act as a heat sink. During a braking event, heat can flow from the discs 610 and 620 into the rotor body 640 and surrounding suspension components, thereby cooling the discs 610 and 620.

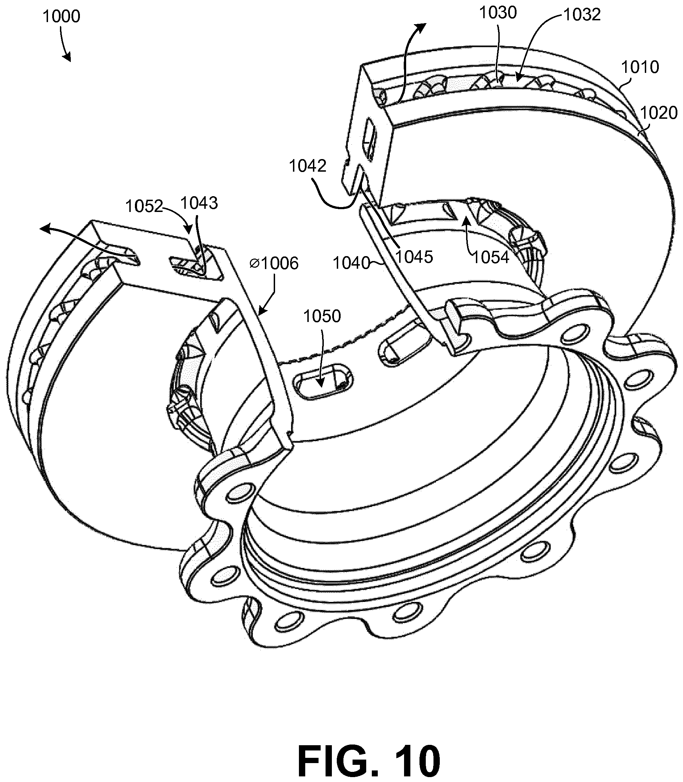

The dual-connection disc brake rotor 600 illustrated in Figs. 6-9 includes alternating axial passageways but no radial passageways. As described below, the dual-connection disc brake rotor 1000 illustrated in Fig. 10 has alternating axial passageways and radial passageways. Otherwise, the dual-connection disc brake rotor 1000 of Fig. 10 is similar in overall structure to the dual-connection disc brake rotor 300 of Fig. 3, the dual-connection disc brake rotor 400 of Figs. 4 and 5, and the dual-connection disc brake rotor 600 of Figs. 6-9, and the dual-connection disc brake rotor 1000 may include the features and alternatives described above for Figs. 3-9.

Fig. 10 is an outboard-side perspective and sectional view showing material portions of a dual-disc brake rotor. As illustrated in Fig. 10, a dual-connection disc brake rotor 1000 may include a rotor body 1040, an inboard disc 1010, and an outboard disc 1020. The inboard disc 1010 and the outboard disc 1020 are each directly connected to the rotor body 1040. The inboard disc 1010 and the outboard disc 1020 are further interconnected by an array of vanes 1030, which extend between the disc pair from one disc to the other, forming a space 1032.

The rotor body 1040 includes a plurality of radial passageways, or openings, 1050 disposed about a periphery of an inner diameter 1006. The radial passageways 1050 are positioned axially between the inboard disc 1010 and the outboard disc 1020 and are axially aligned with the space 1032, thereby connecting the space 1032 with the interior of the rotor body 1040.

Inboard-side axial passageways, or openings, 1052 are disposed about the inner periphery of the inboard disc 1010, and outboard-side axial passageways, or openings, 1054 are disposed about the inner periphery of the outboard disc 1020. The inboard-side axial passageways 1052 and the outboard-side axial passageways 1054 extend from a region outside of the dual-connection disc brake rotor 1000, through the respective inboard disc 1010 or outboard disc 1020, and terminate in the space 1032 between the disc pair. As illustrated, the inboard-side axial passageways 1052 connect the inboard side of the dual-connection disc brake rotor 1000 with the space 1032, and the axial passageways 1054 connect the outboard side of the dual-connection disc brake rotor 1000 with the space 1032. Thus, the inboard-side axial passageways 1052 and the outboard-side axial passageways 1054 allow air to pass from the exterior of the rotor 1000 and through the space 1032 that is between the discs to convectively cool the inboard disc 1010 and the outboard disc 1020. Preferably, the inboard-side axial passageways 1052 and the outboard-side axial passageways 1054 are alternating, such as described above for the inboard-side axial passageways 652 and the outboard-side axial passageways 654 of Figs. 6-9.

One of the inboard-side axial passageways 1052 or the outboard-side axial passageways 1054 is preferably positioned radially between the radial passageways 1050, with the other of the axial passageways remaining being radially aligned to the radial opening 1050. In the example embodiment shown in Fig. 10, the outboard-side axial passageways 1054 are radially aligned with the radial passageways 1050, while the inboard-side axial passageways 1052 are positioned radially between the radial passageways 1050. Thus, as illustrated, the air flow indicated by first arrow 1042 is drawn from a region interior to the rotor body. The air flow indicated by the second arrow 1043 is drawn from a region exterior to the rotor body 1040 and adjacent to the inner periphery of the inboard disc 1010. And the air flow indicated by third arrow 1045 is drawn from a region exterior to the rotor body 1040 and adjacent to the inner periphery of the outboard disc 1020.

The braking efficiency of the dual-connection disc brake rotor 1000 is dependent on many factors including the ability of the brake rotor 1000 to dissipate the heat generated during a braking event. In the dual-connection disc brake rotor 1000, two primary methods of heat dissipation are employed, conductive dissipation through the brake rotor body 1040 and convective dissipation through the space 1032.

The interconnection of the inboard disc 1010 and the outboard disc 1020 by the vanes 1030 provides a conductive pathway by which heat generated during a braking event can be dissipated across both the inboard disc 1010 and the outboard disc 1020 and into the connected rotor body 1040. The rotor body 1040 can function as a heat sink, absorbing heat from the inboard disc 1010 and the outboard disc 1020 and dissipating that heat through convection to the surrounding environment or conduction to other suspension components. This process is also described above with respect to the dual-connection disc brake rotor 300.

Generated heat can also be dissipated by convection through the space 1032 between the inboard disc 1010 and the outboard disc 1020. Like what is described above for the dual-connection disc brake rotor 300 of Fig. 3 and the dual-connection disc brake rotor 400 of Figs. 4-5, as the rotor 1000 is rotated, air is drawn through the radial passageways 1050 and the axial passageways 1052 and 1054, and directed about the vanes 1030 through the space 1032. As the air is drawn through the rotor 1000, it cools the discs by convection. The heated air is then discharged about the periphery of the rotor 1000, thereby dissipating the heat generated during a braking event.

While it is preferred that the inboard disc and the outboard disc are each directly connected to the rotor body, some implementations may instead have a floating inboard disc or a floating outboard disc. In such implementations, improved convective cooling of the dual-disc brake rotor may be achieved by including the axial passageways or the radial passageways, or both, as those features are described above. For example, such implementations may include axial passageways that pass axially and directly through both the inboard disc and the outboard disc, such as described for the dual-connection disc brake rotor 400 of Figs. 4 and 5. Also, such implementations may include alternating axial passageways, such as described for the dual-connection disc brake rotor 600 of Figs. 6-9. And either of these example implementations may include radial passageways, such as the radial passageways for the dual-connection disc brake rotor 300 of Fig. 3, the dual-connection disc brake rotor 400 of Figs. 4 and 5, and the dual-connection disc brake rotor 1000 of Fig. 10.

The dual-connection disc brake rotors described in this document may be constructed in a similar manner as the conventional examples illustrated in Figs. 1 and 2. For example, the rotor may be cast using a green sand method with an included core pattern that creates the desired space and passageways. Once cast, the braking surfaces and other necessary portions of the dual-connection disc brake rotor may be machined. This machining process is similar to what would be required to machine the conventional rotors of Figs. 1 and 2. In other words, preferably no machining is required for the dual-connection disc brake rotor, beyond the traditional machining that would be required by conventional rotor designs.

The previously described versions of the disclosed subject matter have many advantages that were either described or would be apparent to a person of ordinary skill. Even so, all of these advantages or features are not required in all versions of the disclosed apparatus, systems, or methods.

Additionally, this written description makes reference to particular features. It is to be understood that the disclosure in this specification includes all possible combinations of those particular features. For example, where a particular feature is disclosed in the context of a particular aspect or embodiment, that feature can also be used, to the extent possible, in the context of other aspects and embodiments.

Also, when reference is made in this application to a method having two or more defined steps or operations, the defined steps or operations can be carried out in any order or simultaneously, unless the context excludes those possibilities.

Furthermore, the term "comprises" and its grammatical equivalents are used in this application to mean that other components, features, steps, processes, operations, etc. are optionally present. For example, an article "comprising" or "which comprises" components A, B, and C can contain only components A, B, and C, or it can contain components A, B, and C along with one or more other components.

Although specific embodiments of the invention have been illustrated and described for purposes of illustration, it will be understood that various modifications may be made without departing from the scope of the invention. Accordingly, the invention should not be limited except as by the appended claims.

## Claims

1. A dual-connection disc brake rotor (400) comprising:
a substantially tubular rotor body (402);
a first annular braking disc (410) directly connected to the rotor body at an inner periphery of the first braking disc;
a second annular braking disc (420) directly connected to the rotor body at an inner periphery of the second braking disc and positioned a distance axially from the first braking disc, forming a space (440) between the first braking disc and the second braking disc; and
a plurality of vanes (430) disposed within the space and axially interconnecting the first braking disc and the second braking disc,
**characterized in that** the dual-connection disc brake rotor further comprises axial passageways (409) disposed around the inner periphery of the first disc and the inner periphery of the second disc, the axial passageways extending axially through the first disc and the second disc, connecting the space (440) to a first region exterior to the rotor body (402) and adjacent to the inner periphery of the first disc, and connecting the space to a second region exterior to the rotor body and adjacent to the inner periphery of the second disc; and
radial passageways (408) aligned with the space (440) and extending radially through the rotor body,
connecting the space to a region interior to the rotor body (402) encircled by an inner diameter (406) of the rotor body, the axial passageways (409) being radially aligned with the radial passageways (408).

2. The brake rotor of claim 1, in which the rotor body, the first annular braking disc, and the second annular braking disc are cast in one piece.

3. The brake rotor of claim 2, in which the rotor body is substantially perpendicular to the first annular braking disc where the first annular braking disc is directly connected to the rotor body, and in which the rotor body is substantially perpendicular to the second annular braking disc where the second annular braking disc is directly connected to the rotor body.

## Patentansprüche

1. Zweifachverbindungs-Scheibenbremsenrotor (400) mit:
einem im Wesentlichen röhrenförmigen Rotorkörper (402);
einer ersten ringförmigen Bremsscheibe (410), die an einem Innenumfang der ersten Bremsscheibe direkt mit dem Rotorkörper verbunden ist;
einer zweiten ringförmigen Bremsscheibe (420), die an einem Innenumfang der zweiten Bremsscheibe direkt mit dem Rotorkörper verbunden ist und in einem axialen Abstand von der ersten Bremsscheibe positioniert ist, wodurch ein Raum (440) zwischen der ersten Bremsscheibe und der zweiten Bremsscheibe gebildet ist; und
einer Vielzahl von Platten (430), die innerhalb des Raums angeordnet sind und die erste Bremsscheibe und die zweite Bremsscheibe axial miteinander verbinden,
**dadurch gekennzeichnet, dass** der Zweifachverbindungs-Scheibenbremsenrotor ferner aufweist:
axiale Durchlässe (409), die um den Innenumfang der ersten Bremsscheibe und den Innenumfang der zweiten Bremsscheibe angeordnet sind, wobei die axialen Durchlässe axial durch die erste Bremsscheibe und die zweite Bremsscheibe verlaufen und den Raum (440) mit einem ersten Bereich außerhalb des Rotorkörpers (402) und angrenzend an den Innenumfang der ersten Bremsscheibe verbinden und den Raum mit einem zweiten Bereich außerhalb des Rotorkörpers und angrenzend an den Innenumfang der zweiten Bremsscheibe verbinden; und
radiale Durchlässe (408), die mit dem Raum (440) ausgerichtet sind und radial durch den Rotorkörper verlaufen, wobei sie den Raum mit einem Bereich innerhalb des Rotorkörpers (402) verbinden, der durch einen Innendurchmesser (406) des Rotorkörpers umgeben ist, wobei die axialen Durchlässe (409) radial mit den radialen Durchlässen (408) ausgerichtet sind.

2. Bremsrotor nach Anspruch 1, bei dem der Rotorkörper, die erste ringförmige Bremsscheibe und die zweite ringförmige Bremsscheibe in einem Stück gegossen sind.

3. Bremsrotor nach Anspruch 2, bei dem der Rotorkörper zu der ersten ringförmigen Brerrisscheibe im Wesentlichen senkrecht steht, wo die erste ringförmige Bremsscheibe direkt mit dem Rotorkörper verbunden ist,
und bei dem der Rotorkörper zu der zweiten ringförmigen Bremsscheibe im Wesentlichen senkrecht steht, wo die zweite ringförmige Bremsscheibe direkt mit dem Rotorkörper verbunden ist.

## Revendications

1. Rotor de frein à disque à double connexion (400) comprenant :
un corps de rotor substantiellement tubulaire (402) ;
un premier disque de freinage annulaire (410) relié directement au corps de rotor sur une périphérie interne du premier disque de freinage;
un second disque de freinage annulaire (420) relié directement au corps de rotor sur une périphérie interne du second disque de freinage et positionné à distance axialement du premier disque de freinage, en formant un espace (440) entre le premier disque de freinage et le second disque de freinage ; et
une pluralité de vannes (430) disposées à l'intérieur de l'espace et interconnectant le premier disque de freinage et le second disque de freinage,
**caractérisé en ce que** le rotor de frein à disque à double connexion comprend par ailleurs des passages axiaux (409) disposés autour de la périphérie interne du premier disque et de la périphérie interne du second disque, les passages axiaux s'étendant axialement à travers le premier disque et le second disque, reliant l'espace (440) à une première région extérieure au corps de rotor (402) et adjacente à la périphérie interne du premier disque, et reliant l'espace à une seconde région extérieure au corps de rotor et adjacente à la périphérie interne du second disque ; et
des passages radiaux (408) alignés l'espace (440) et s'étendant radialement à travers le corps de rotor, reliant l'espace à une région intérieure au corps de rotor (402) encerclée par un diamètre interne (406) du corps de rotor, les passages axiaux (409) étant alignés radialement avec les passages radiaux (408).

2. Rotor de frein selon la revendication 1, dans lequel le rotor de frein, le premier disque de freinage annulaire et le second disque de freinage annulaire sont moulés en une pièce.

3. Rotor de frein selon la revendication 1, dans lequel le rotor de frein est substantiellement perpendiculaire au premier disque de freinage annulaire lorsque le premier disque de freinage annulaire est relié directement au corps de rotor, et dans lequel le rotor de frein est substantiellement perpendiculaire au second disque de freinage annulaire lorsque le second disque de freinage annulaire est relié directement au corps de rotor.
